# EUROPÄISCHE PATENTSCHRIFT

(11) **EP 1 334 000 B1**
(45) Veröffentlichungstag und Bekanntmachung des Hinweises auf die Patenterteilung: **05.01.2005**
(21) Anmeldenummer: 01980528.2
(22) Anmeldetag: 30.10.2001
(51) Int. Cl.: B60K 28/16

(54) **REGELVERFAHREN ZUR ERHÖHUNG DER TRAKTION BEI EINEM FAHRZEUG BEI GLEICHBLEIBENDER FAHRZEUGSTABILITÄT**
REGULATING METHOD FOR INCREASING THE TRACTION OF A VEHICLE WHILE MAINTAINING CONSTANT VEHICLE STABILITY
PROCEDE DE REGLAGE PERMETTANT D'AUGMENTER LA TRACTION D'UN VEHICULE POUR UNE MEME UNE STABILITE

(30) Priorität: 16.11.2000 DE 10056760
(43) Veröffentlichungstag der Anmeldung: 13.08.2003
(73) Patentinhaber: Bayerische Motoren Werke Aktiengesellschaft, 80809 München (DE); ROBERT BOSCH GMBH, 70442 Stuttgart (DE)
(72) Erfinder: HERB, Eugen, 80798 München (DE); STRAUB, Alfred, 82281 Egenhofen (DE); HARTMANN, Uwe, 70839 Gerlingen (DE)
(74) Vertreter: Bullwein, Fritz
(86) Internationale Anmeldenummer: PCT/EP2001/012507
(87) Internationale Veröffentlichungsnummer: WO 2002/040306

(56) Entgegenhaltungen:
- EP-A- 0 363 306
- DE-A- 3 740 433
- DE-A- 19 855 332

## Beschreibung

Die Erfindung betrifft ein Regelverfahren zur Erhöhung der Traktion bei einem Fahrzeug gemäß dem Oberbegriff des Anspruchs 1.

Antriebs- oder Schlupfregelsysteme bei Kraftfahrzeugen sind hinreichend bekannt. Bei herkömmlichen Schlupfregelsystemen akzeptiert man meist einen Kompromiss zwischen einer geforderten Fahrstabilität und einer guten Traktion bei einem Fahrzeug. Insbesondere wird der Schlupf an den angetriebenen Rädern meist innerhalb fester Schlupfgrenzen gehalten. Durch den akzeptierten Kompromiss zwischen Vortrieb und Fahrstabilität kann man bei bestimmten Fahrbahngegebenheiten, beispielsweise auf Schotter, bei Schneematsch oder im Tiefschnee, nur einen unzureichenden Vortrieb erreichen.

Beispielsweise offenbart DE 3740433 A ein Regelverfahren zur Erhöhung der Traktion bei einem Fahrzeug gemäß dem Oberbegriff des Anspruchs 1.

Aufgabe der Erfindung ist es, ein Regelverfahren der eingangs genannten Art weiterzubilden, mit dem auch auf Strecken mit lockerem Untergrund eine gute Traktion bei gleichbleibender Fahrzeugstabilität möglich ist.

Diese Aufgabe wird durch die im Anspruch 1 genannten Merkmale gelöst.

Demgemäß wird ein Antriebsschlupf-Schwellwert situationsbedingt bestimmt und eingestellt. Dabei bildet man zumindest ein Schlupfintegral anhand der Radgeschwindigkeiten an der angetriebenen und der nicht-angetriebenen Achse bzw. der Fahrzeugreferenzgeschwindigkeit und zieht daraus Rückschlüsse auf die Fahrbahngegebenheiten. Abhängig von der Fahrbahnbeschaffenheit (z.B. Tiefschnee, Niederreibwertstrecken, Hochreibwertstrecken, nasse Fahrbahn) schwankt der optimale Schlupf stark. Je nach Schlupfintegral wird der Schwellwert für den Antriebsschlupf verändert und so den Fahrbedingungen angepasst. So kann der aktuelle Schlupfwert in optimaler Weise vergrößert oder verkleinert werden. Erfindungsgemäß kann zumindest ein Schlupf-Schwellwert angepasst werden, es können aber auch mehrere Schlupf-Schwellwerte entsprechend geändert werden.

Ein unterer Antriebsschlupf-Schwellwert wird vorzugsweise in einem Standardprogramm vorgegeben. Im Rahmen der Schlupfintegration werden sowohl der absolute Schlupf als auch der zeitliche Antriebsmomentenverlauf bewertet. Ferner ist über eine vorhandene Sensorik eines in dem Fahrzeug verwendeten Antriebsregelsystems vorzugsweise zumindest einer der Werte aus Giergeschwindigkeit, Lenkwinkeldynamik und Querbeschleunigung ermittelt und bei dem Regelverfahren berücksichtigt.

So kann beispielsweise ab einer gewissen Größe der Querdynamik, die beispielsweise aus der Querbeschleunigung abzuleiten ist, ein Standardprogramm ausgewählt werden, welches auf eine besonders gute Traktion verzichtet und die Fahrzeugstabilität priorisiert. Dabei wird vorzugsweise nicht sprunghaft umgeschaltet. Vielmehr wird der Antriebsschlupf-Schwellwert kontinuierlich verändert (Schlupfschwellenaufweitung).

Der Bewertung der reinen Querdynamik kann eine Betrachtung anderer fahrdynamischer Größen (z.B. Lenkwinkelaktivität, Gierratenverlauf) überlagert sein, was dazu führen kann, dass auch bei geringer Querbeschleunigung ein Standardprogramm mit einem minimalen Schlupf-Schwellwert zur Anwendung kommt.

Gemäß einer vorteilhaften Ausführungsform der Erfindung findet eine Erhöhung des Antriebsschlupf-Schwellwertes bis zu einer bestimmten Geschwindigkeit von beispielsweise 50 km/h bis 80 km/h statt. Über dieser Geschwindigkeit kann der Schwellwert vorzugsweise wieder auf einen Standardschwellwert zurückgeführt werden. Die Veränderung des Schwellwertes kann dabei linear oder progressiv erfolgen.

Die Erfindung stellt insgesamt ein Verfahren zur Verfügung, bei dem speziell auf Strecken mit lockerem Untergrund eine gute Traktion erreicht werden kann. Diese Funktion kann dem Fahrer wahlweise angeboten werden und wird bei ihrer Auswahl vorzugsweise optisch oder akustisch angezeigt. Insbesondere kann durch die dynamische Umschaltung auf Standardprogramme oder kleine Schlupfwerte eine ausreichende Stabilität sichergestellt werden. Die Information über das Stabilitätsverhalten bekommt man aus den Werten für die Lenkwinkeldynamik, die Giergeschwindigkeit oder die Querbeschleunigung. Natürlich könnten auch andere die Fahrzeugstabilität beschreibende Größen verwendet werden.

Nachfolgend ist ein Ausführungsbeispiel der vorliegenden Erfindung angegeben, das mit Bezug auf die beiliegenden Zeichnungen näher erläutert wird. Die Zeichnungen zeigen in
- Fig. 1: ein Ablaufdiagramm, welches einen Teil einer Stabilitätsdynamikregelung bei einem Fahrzeug angibt, und
- Fig.2: ein Diagramm, aus welchem eine Art der Bildung eines Schlupfintegrals ersehen werden kann.

Im Ablaufdiagramm wird beim Ablauf der Stabilitätsregelung in Schritt 10 zunächst abgefragt, ob ein Traktionsmodus (Trakt), der durch Betätigung einer Taste eingestellt werden kann, vom Fahrer gewählt wurde. Ist dies nicht der Fall, so wird an das Ende des Algorithmus verzweigt.

Wurde der Traktionsmodus (Trakt) ausgewählt, wird in Schritt 12 gefragt, ob eine Antriebsschlupfregelung (ASC) ausgewählt ist, welche ebenfalls durch Betätigung einer Taste im Fahrzeug ein- und ausgeschaltet werden kann. Ist dies nicht der Fall, so wird ebenfalls an das Ende des Algorithmus verzweigt.

Wurde die Antriebsschlupfregelung (ASC) in Schritt 12 ausgewählt, so wird in Schritt 14 geprüft, ob die Fahrzeuggeschwindigkeit v in einem Bereich zwischen einem unteren Geschwindigkeits-Schwellwert v_u und einem oberen Geschwindigkeits-Schwellwert v_o liegt. Vorliegend wird der untere Geschwindigkeits-Schwellwert bei 0 km/h und der obere Geschwindigkeits-Schwellwert bei 80 km/h angenommen. Liegt die Fahrzeugsgeschwindigkeit v nicht in diesem Geschwindigkeitsfenster, so wird wiederum an das Ende des Algorithmus verzweigt.

Liegt die Fahrzeuggeschwindigkeit v innerhalb des obigen Geschwindigkeitsfensters und sind auch alle vorhergehenden Bedingungen erfüllt, so wird zum Schritt 16 verzweigt.

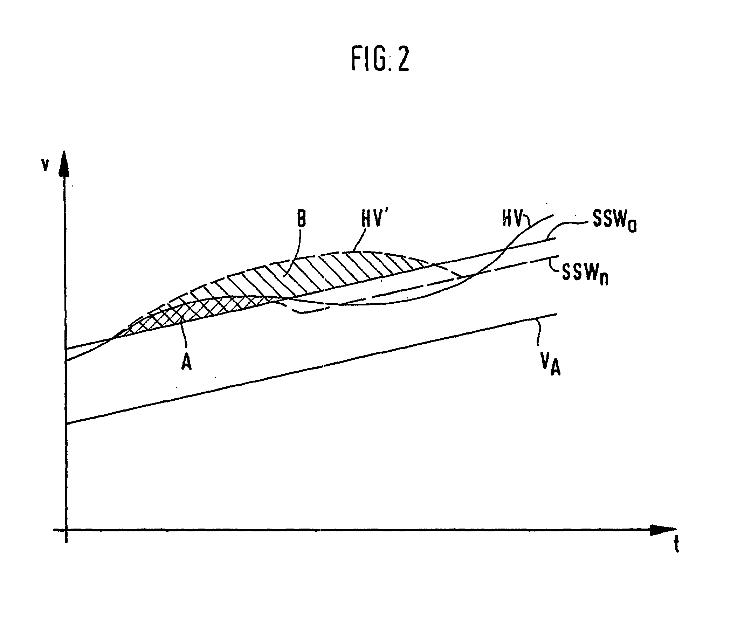

Im Schritt 16 wird ein Sollschlupffaktor U_Trakt als eine Funktion von der Fahrzeuggeschwindigkeit v, nämlich f(v), bestimmt. Überdies wird ein Sollschlupfgrenzwert S₂ aus einem Basissollschlupffaktor S₁ multipliziert mit dem Sollschlupffaktor U_Trakt bestimmt. Dieser Sollschlupfgrenzwert S₂ entspricht in Fig. 2 den Sollschlupfschwellen SSWₐ bzw SSWₙ.

Sodann wird in Schritt 18 geprüft, ob ein Integrationswert des Ist-Schlupfes an einem der Antriebsräder (S_HR = Integrationswert Ist-Schlupf am Rad hinten rechts, S_HL = Integrationswert Ist-Schlupf am Rad hinten links) oberhalb eines Integrations-Sollschlupfgrenzwert S_Ü liegt. In diesem Zusammenhang wird auf die nachfolgend noch zu erläuternde Fig. 2 hingewiesen, wo die Bedeutung des Schlupfintegrals erklärt ist. In Abhängigkeit vom Schlupfintegral wird der Schlupfschwellwert verändert. Ist das Schlupfintegral nicht zu groß (Nein), so wird zu Schritt 22 verzweigt, wo ein Sollschlupf-Erhöhungsfaktor U_Erh als Funktion von der Zeit bestimmt wird (U_Erh=f(t)). Mit diesem Soll-Schlupf-Erhöhungsfaktor U_Erh wird der Sollschlupfgrenzwert S₂ multipliziert, um zu einem neuen Sollschlupf-Grenzwert S₃ zu gelangen.

Wird in Schritt 18 festgestellt, dass einer oder beide der Schlupfintegrale der angetriebenen Rädern zu groß ist, so wird ein Sollschlupf-Reduzierfaktor U_Red als Funktion von der Zeit bestimmt (U_Red=f(t)) und durch Multiplikation mit diesem Sollschlupf-Reduzierfaktor U_Red ein neuer Sollschlupf-Grenzwert S₃ berechnet.

Sodann wird im Schritt 24, zu welchem von den Schritten 20 und 22 hin verzweigt wird, ein Querdynmik-Schlupffaktor U_Q als Funktion der Querbeschleunigung AY, des Lenkwinkels LW, der Drehrate DR und der Zeit t bestimmt und ein neuer Sollschlupf S₄ durch Multiplikation des alten Sollschlupfes S₃ mit diesem Wert U_Q ermittelt.

Durch diese Regelung, kann der Schlupfschwellengrenzwert, insbesondere eine Schlupfschwellenaufweitung, kontinuierlich eingestellt werden. Dabei wird in den Schritten 20 und 22 die Längsdynamik und im Schritt 24 die Querdynamik berücksichtigt.

Insbesondere werden bei den verschiedenen Berechnungen Schlupfintegrale aus den Differenzgeschwindigkeiten zwischen den nicht-angetriebenen und den angetriebenen Rädern gebildet. In Fig. 2 ist ein v-t-Diagramm dargestellt. Dabei bezeichnet der Graph v_{A} die Referenzgeschwindigkeit des Fahrzeugs, die im wesentlichen mit den Vorderradgeschwindigkeiten bei einem an den hinteren Rädern angetriebenen Fahrzeug übereinstimmt. Vorliegend nimmt die Referenzgeschwindigkeit v_{A} somit gleichmäßig monoton steigend zu.

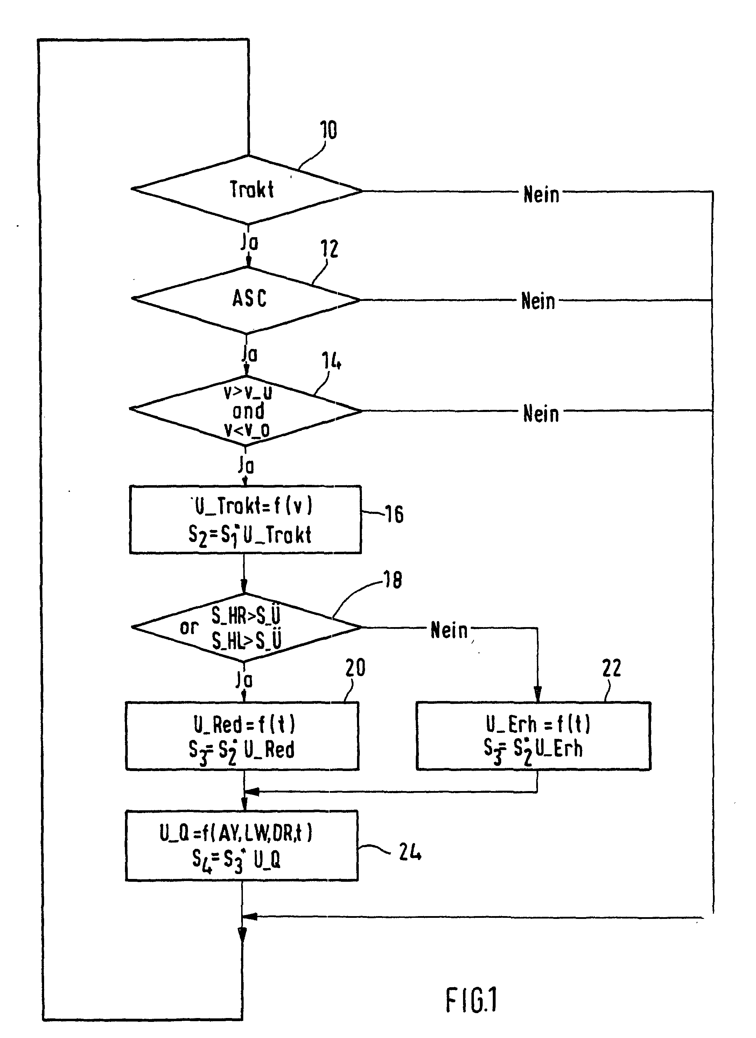

Parallel zu der Referenzgeschwindigkeit v_{A} ist ein Antriebsschlupfschwellwert SSWₐ angegeben, der in Abhängigkeit von der Fahrzeuggeschwindigkeit gewählt wird und auf den die Hinterradgeschwindigkeit HV eingeregelt wird. Durch die Regelung schwankt die Hinterradgeschwindigkeit HV um den Antriebsschlupfschwellwert SSWₐ. Befindet sich die Hinterradgeschwindigkeiten HV oberhalb des Schwellwertes SSWₐ so laufen die Hinterräder mit einem zu großen Schlupf. Der Schlupfunterschied (hier mit pos. Vorzeichen) wird über die Zeit aufintegriert (Bereich A) und mit vorgegebenen Schlupfintegralwerten verglichen (vgl. S_Ü in Fig. 1).

Ist ein Schlupfintegral zu groß, wie dies beispielhaft mit der unter der alternativen, gestrichelten Hinterradgescheindigkeit HV' mit Bereich B angegeben ist, so wird der Schlupfschwellwert SSW abgesenkt. In Fig. 2 ist dies in Form des neuen Schlupfschwellwert SSWₙ dargestellt. Wäre das Schlupfintegral zu klein, so würde der Schlupfschwellwert im Gegenzug angehoben werden (nicht näher dargestellt). Auf diese Weise wird der Schlupfschwellwert kontinuierlich verändert. Nach einer Veränderung des Schlupfschwellwertes wird die Hinterradgeschwindigkeit nunmehr auf den jeweils neuen Wert eingeregelt.

In Fig. 2 nicht näher dagestellt ist eine Überlagerung mit einer Querdynamikregelung, wonach eine Schwellwertanhebung ab einem bestimmen Querdynamikwert ganz zurückgeführt wird, so dass bei zügigen Kurvenfahrten oder bei Kurvenfahrten und widrigen Straßenverhältnissen die Fahrzeugstabilität priorisiert wird.

## Patentansprüche

1. Regelverfahren zur Erhöhung der Traktion bei einem Fahrzeug bei gleichbleibender Fahrzeugstabilität, bei dem ein Antriebsschlupf an Antriebsrädern ermittelt und mit zumindest einem Schlupf-Schwellwert verglichen wird, und die Antriebsleistung dann vermindert wird, wenn der Antriebsschlupf den Schlupf-Schwellwert übersteigt,
**dadurch gekennzeichnet,**
**dass** zumindest ein Schlupfintegral aus den Differenzgeschwindigkeiten zwischen den angetriebenen und den nichtangetriebenen Rädern gebildet wird und
**dass** der zumindest eine Schlupf-Schwellwert in Abhängigkeit von dem zumindest einen Schlupfintegral fortlaufend bestimmt wird.

2. Regelverfahren nach Anspruch 1,
**dadurch gekennzeichnet,**
**dass** mehrere Schlupfintegrale gebildet und mehrere Schwellwerte in Abhängigkeit von jeweiligen Schlupfintegralen fortlaufend bestimmt werden.

3. Regelverfahren nach Anspruch 1 oder 2,
**dadurch gekennzeichnet,**
**dass** das zumindest eine Integral aus einer über dem Schlupf-Schwellwert liegenden Drehgeschwindigkeit zumindest eines angetriebenen Rades berechnet wird.

4. Regelverfahren nach einem der Ansprüche 1 bis 3,
**dadurch gekennzeichnet,**
**dass** der zumindest eine Schlupf-Schwellwert zusätzlich in Abhängigkeit von zumindest einer der Größen aus Querbeschleunigung des Fahrzeugs, Lenkwinkeldynamik und/oder der Giergeschwindigkeit bestimmt wird.

5. Regelverfahren nach einem der Ansprüche 1 bis 4,
**dadurch gekennzeichnet,**
**dass** der zumindest eine Schlupf-Schwellwert kontinuierlich verändert wird.

6. Regelverfahren nach einem der Ansprüche 1 bis 5,
**dadurch gekennzeichnet,**
**dass** der zumindest eine Schlupf-Schwellwert zusätzlich in Abhängigkeit von der Fahrzeuggeschwindigkeit bestimmt wird.

7. Regelverfahren nach einem der vorhergehenden Ansprüche,
dass bei bestimmten Bedingungen vorgegebene Werte für den zumindest eine Schlupf-Schwellwert ausgewählt werden.

## Claims

1. A method of control for increasing the pull of a vehicle without changing the stability, wherein the slip of the drive wheels is measured and compared with at least one threshold value and the drive power is reduced if the drive slip exceeds the slip threshold,
**characterised in that** at least one slip integral is obtained from the difference in speed between the driven and non-driven wheels and the at least one slip threshold value is continuously determined in dependence on the at least one slip integral.

2. A method according to claim 1, **characterised in that** a number of slip integrals are obtained and a number of threshold values are continuously determined in dependence on respective slip integrals.

3. A method according to claim 1 or 2, **characterised in that** the at least one integral is calculated from a speed of rotation of at least one driven wheel which is above the slip threshold.

4. A method according to any of claims 1 to 3, **characterised in that** the at least one slip threshold value is additionally determined in dependence on at least one of the following variables: the transverse acceleration of the vehicle, the steering-angle dynamics and/or the yawing speed.

5. A method according to any of claims 1 to 4, **characterised in that** the at least one slip threshold value is continuously altered.

6. A method according to any of claims 1 to 5, **characterised in that** the at least one slip threshold value is additionally determined in dependence on the vehicle speed.

7. A method according to any of the preceding claims, wherein set values for the at least one slip threshold value are selected under certain conditions.

## Revendications

1. Procédé de régulation pour augmenter la traction pour un véhicule en maintenant constante la stabilité du véhicule, selon lequel on détermine un glissement d'entraînement glissement moteur au niveau de roues motrices et on le compare d'abord avec au moins une valeur de seuil de glissement, la puissance d'entraînement étant réduite lorsque le glissement d'entraînement dépasse la valeur de seuil de glissement,
**caractérisé en ce qu'**
au moins une intégrale de glissement est formée à partir des vitesses différentielles entre les roues motrices et non motrices, et
l'au moins une valeur de seuil de glissement est déterminée continuellement en fonction de l'au moins une intégrale de glissement.

2. Procédé de régulation selon la revendication 1,
**caractérisé en ce que**
plusieurs intégrales de glissement sont formées et plusieurs valeurs seuil sont déterminées continuellement en fonction des intégrales de glissement respectives.

3. Procédé de régulation selon la revendication 1 ou 2,
**caractérisé en ce que**
l'au moins une intégrale est calculée à partir d'une vitesse de rotation d'au moins l'une des roues motrices supérieure à la valeur de seuil de glissement.

4. Procédé de régulation selon l'une quelconque des revendications 1 à 3,
**caractérisé en ce que**
l'au moins une valeur seuil de glissement est également déterminée en fonction d'au moins l'une des grandeurs issues de l'accélération transversale du véhicule, de la dynamique de l'angle de direction et/ou de la vitesse de lacet.

5. Procédé de régulation selon l'une quelconque des revendications 1 à 4,
**caractérisé en ce que**
l'au moins une valeur de seuil de glissement est modifiée continuellement.

6. Procédé de régulation selon l'une quelconque des revendications 1 à 5,
**caractérisé en ce que**
l'au moins une valeur de seuil de glissement est également déterminée en fonction de la vitesse du véhicule.

7. Procédé de régulation selon l'une quelconque des revendications précédentes,
**caractérisé en ce que**
des valeurs prédéterminées sous certaines conditions sont choisies pour l'au moins une valeur de seuil de glissement.
